# EUROPÄISCHE PATENTSCHRIFT

(11) **EP 1 199 116 B1**
(45) Veröffentlichungstag und Bekanntmachung des Hinweises auf die Patenterteilung: **06.04.2005**
(21) Anmeldenummer: 01124857.2
(22) Anmeldetag: 18.10.2001
(51) Int. Cl.: B21D 15/10

(54) **Verfahren zur Herstellung von rohrförmigen Konstruktionsteilen mit radial umlaufenden wellenförmigen Auswölbungen**
Method of making tubular components with radial wave-shaped bulges
Procédé de fabrication d'éléments tubulaires avec des surfaces bombées radialement ondulées

(30) Priorität: 19.10.2000 DE 10051946
(43) Veröffentlichungstag der Anmeldung: 24.04.2002
(73) Patentinhaber: Umicore AG & Co. KG, 63457 Hanau-Wolfgang (DE)
(72) Erfinder: Singer, Rudolf, 55270 Engelstadt (DE); Gölitzer, Hubertus, 63755 Alzenau (DE)
(74) Vertreter: Stellbrink, Axel

(56) Entgegenhaltungen:
- DE-A- 1 777 181
- DE-A- 2 535 362
- US-A- 3 625 040
- US-A- 4 513 598
- PATENT ABSTRACTS OF JAPAN vol. 012, no. 485 (M-777), 19. Dezember 1988 (1988-12-19) & JP 63 207420 A (HITACHI LTD), 26. August 1988 (1988-08-26)

## Beschreibung

Die Erfindung betrifft ein Verfahren zur Herstellung von aus PGM-Werkstoffen gefertigten rohrförmigen Konstruktionsteilen mit radial umlaufenden wellenförmigen Auswölbungen durch Umformen aus glattwandigen Rohrstücken.

In der Glasindustrie, insbesondere in Anlagen zum Schmelzen und Heißformen von Spezialglas, sind Bauteile aus Edelmetall- wie vorzugsweise PGM-Werkstoffen im Einsatz.

Werkstoffe aus PGM-(Platinum Group Metals) Metallen zeichnen sich aufgrund ihres hohen Schmelzpunktes durch eine hohe Temperaturbeständigkeit und weiterhin durch hohe mechanische Festigkeit und Beständigkeit gegen Abrassion aus und eignen sich daher in besonderem Maße zur Herstellung von Konstruktionsteilen in Anlagen oder Anlagenteilen, die in Kontakt mit Glasschmelze kommen. Geeignete Materialien sind Platin und Legierungen von Platin und/oder anderen PGM-Metallen, die gegebenenfalls auch untergeordnete Mengen an Unedelmetallen als weitere Legierungskomponenten oder oxidische Zusätze enthalten können. Typische Werkstoffe sind Feinplatin, PtRh10 (Platin-Rhodium-Legierung mit 10% Rhodium) oder Platin, das zur Steigerung der Festigkeit und Hochtemperaturkriechfestigkeit eine geringe Menge an feinverteiltem Refraktärmetalloxid, wie insbesondere Zirkondioxid, enthält (sogenanntes FKS-(Feinkorn-stabilisiertes) Platin).

Derartige schmelztechnischen Anlagenkomponenten dienen zum Schmelzen, Läutern, Transportieren, Homogenisieren und Portionieren des geschmolzenen Glases.

Bei solchen Bauteilen handelt es sich im wesentlichen um Edelmetallblech-Konstruktionen die häufig als dünnwandige Rohrsysteme ausgeführt sind. Durch diese strömt das schmelzflüssige Glas mit Temperaturen zwischen 1000°C und 1700°C. Diese Rohrsysteme sind in der Regel von einer isolierenden sowie stützenden Keramik umgeben, wobei diese wiederum häufig von stützenden Metallkonstruktionen wie Metallkästen gehalten wird.

Die PGM-Bauteile werden bei Raumtemperatur gefertigt und in die entsprechenden Anlagen eingebaut. Der Betrieb erfolgt aber bei Temperaturen im Bereich von etwa 1000 bis 1700°C.

Dünnwandige Blechkonstruktion, insbesondere bei hohen Betriebstemperaturen, haben nur eine geringe Formsteifigkeit. Um diesen Nachteil auszugleichen, muss man entweder die Materialstärke erhöhen, oder die Konstruktion durch versteifende Formgebungsmaßnahmen wie etwa die Ausformung von Knicken, Kanten, Wellen oder Falten stabilisieren.

Weiterhin muß bei Auslegung und Konstruktion entsprechender Anlagen die hohe Wärmeausdehnung der PGM-Bauteile sowie die unterschiedliche Wärmeausdehnung aller weiteren beteiligten Materialien (Edelmetalle, Keramiken, Stähle etc.) bedacht werden. Der mittlere Ausdehnungskoeffizient von Platin liegt bei einer Temperatur von 1500°C bei 11,2 x 10⁻⁶ K⁻¹ Das bedeutet, daß sich ein Platinbauteil einer Länge von einem Meter bei Raumtemperatur bei 1500°C um 16,6 Millimeter ausgedehnt hat.

Bedingt durch die unterschiedlichen Wärmeausdehnungskoeffizienten der verschiedenen Materialien und konstruktiver Festpunkte, die an einem Bauteil vorhanden sind, ist eine freie Ausdehnung des System nicht möglich. Dadurch kann es an schwachen Stellen der PGM-Blechkonstruktionen zum Ausknicken oder auch zu Beulfalten kommen. Dies wiederum führt zum ungewollten vorzeitigen Ausfall des Systems. In Anlagen oder Anlagenteilen aus PGM-Werkstoffen, die in Kontakt mit Glasschmelze kommen, sind daher Konstruktionsteile vorzusehen, die die Längenausdehnung kompensieren.

Als Konstruktionselemente, die in rohrförmigen Anlagenteilen eine radiale Versteifung und in einem gewissen Umfang auch eine Längenausdehnungskompensation bewirken, können Rohrabschnitte eingesetzt werden, welche radial umlaufende wellenförmige Auswölbungen aufweisen, wie etwa Wellrohre oder Bälge.

Das Umformen entsprechender glattwandiger Rohrstücke zu Wellrohren erfolgt gemäß dem Stand der Technik durch das sogenannte Rollsicken oder Rollformen. Hierbei wird die Wandung des glattwandigen Rohrstücks durch ein von der Innenseite einwirkendes Rollwerkzeug in die radiale wellenförmige Ausnehmung eines Formwerkzeuges ausgedrückt. Beim Rollsicken wird Schritt für Schritt jede einzelne Welle nacheinander gerollt.

Ein so verformtes und damit in radialer Richtung versteiftes Rohr wird in axialer Richtung elastischer und kann somit auch zur Längenkompensation eingesetzt werden.

Das Rollsicken hat jedoch - gerade im Hinblick auf die Herstellung von gewellten Bauteilen aus PGM-Werkstoffen für den Einsatz in schmelztechnischen Anlagen der Glasindustrie - eine Reihe von Nachteilen und Anwendungsgrenzen.

So lassen sich durch das Rollsicken nur verhältnismäßig kleine Formänderungen, etwa im Bereich sinusförmiger Wellenkonturen realisieren. Höhere Wellengänge, stärkere Faltungen oder gar beliebige Konturenformen sind praktisch nicht herstellbar. Demgemäß sind durch Rollsicken hergestellte Wellrohre nur bedingt für die Kompensation thermischer Längenausdehnung geeignet, da die entsprechende Wellgeometrien nur mäßige Längenausdehnungen auffangen können.

Darüber hinaus ist bei kleinen Rohrdurchmessern ein Rollsicken nicht möglich.

Durch das Strecken des Materials beim Rollsicken erfolgt zwangsweise eine Ausdünnung (Wandstärkenreduzierung) im Bereich der Wellen. Hierdurch wird das Bauteil erheblich geschwächt, was bei den thermischen und abbrassiven Belastungen im Kontakt mit Glasschmelzfluß zu einem vorzeitigen Ausfall führen kann.

Der Erfindung lag daher die Aufgabe zugrunde, Bauteile aus PGM-Werkstoffen für den Einsatz als Längenausdehnungskompensatoren in mit Glasschmelze in Kontakt kommenden Anlagen oder Anlagenteilen bereitzustellen und ein Herstellverfahren für derartige Bauteile aufzuzeigen, bei dem die vorstehend dargestellten Nachteile vermieden werden.

In US 3,625,040 und in DE 1 777 181 B2 werden Vorrichtungen zur Umformung von glattwandigen Rohrstücken durch Aufweiten mit Hilfe von hydraulischem Innendruck beschrieben.

Es wurde nun gefunden, daß sich ein Fertigungsverfahren zur Herstellung von rohrförmigen Konstruktionsteilen mit radial umlaufenden wellenförmigen Auswölbungen, bei dem das Umformen durch Auspressen mit hydraulischem Innendruck erfolgt, auch auf aus PGM-Werkstoffen gefertigten glattwandigen Rohrstücken anwendbar ist.

Gegenstand der Erfindung ist insbesondere ein Verfahren zur Herstellung von aus PGM-Werkstoffen gefertigten rohrförmigen Konstruktionsteilen mit radial umlaufenden wellenförmigen Auswölbungen durch Umformen aus glattwandigen Rohrstükken, das dadurch gekennzeichnet ist, daß man ein glattwandiges Rohrstück in ein zylindrisches Formwerkzeug mit einem Innendurchmesser, der im wesentlichen dem Außendurchmesser des Rohrstücks entspricht, und das radiale wellenförmige Ausnehmungen aufweist, einbringt, dieses an beiden axialen Enden mit je einem das Rohrende dicht verschließenden Preßwerkzeug versieht, den so gebildeten Raum vollständig mit einer hydraulischen Flüssigkeit befüllt und dann durch Ausübung einer axialen Kompression über die Preßwerkzeuge in der Weise einen hydraulischen Innendruck erzeugt, daß bei gleichzeitiger Verkürzung des Rohrstücks dessen Wandung den Ausnehmungen des Formwerkzeugs entsprechende Auswölbungen erhält.

In dem erfindungsgemäßen Verfahren können als Ausgangswerkstücke nahtlose oder geschweißte glattwandige Rohrstücke aus technischen PGM-Werkstoffen mit rundem oder polygonalem Querschnitt beliebiger Radien eingesetzt werden. Als PGM-Werkstoffe kommen vorzugsweise Feinplatin, PtRh10 oder FKS-Platin in Betracht. Das Umformen des Rohrstücks erfolgt in einer Umformanlage durch Auspressen mit hydraulischem Innendruck unter gleichzeitiger Ausübung einer axialen Kompression auf die Rohrenden. Hierzu wird das umzuformende glattwandiges Rohrstück in ein zylindrisches Formwerkzeug mit einem Innendurchmesser, der im wesentlichen dem Außendurchmesser des Rohrstücks entspricht, und das radiale wellenförmige Ausnehmungen aufweist, eingebracht. An den beiden axialen Rohrenden werden Preßwerkzeuge angebracht, die die Rohrenden dicht verschließen. Der so gebildete Raum wird dann vollständig mit einer hydraulischen Flüssigkeit befüllt. Als hydraulische Flüssigkeiten eignen sich vorzugsweise Wasser oder in der Technik gebräuchliche hydraulische Öle. Zum eigentlichen Umformvorgang wird dann eine axialen Kompression über die Preßwerkzeuge auf die Rohrenden ausgeübt und diese aufeinander zubewegt. Hierdurch wird in dem Innenraum über die Flüssigkeit ein auf die Rohrwandungen wirkender hydraulischer Innendruck erzeugt, durch den die Wandung in die Ausnehmungen des Formwerkzeugs ausgedrückt wird und in dem Maße der Verkürzung des Rohrstücks entsprechende Auswölbungen erhält.

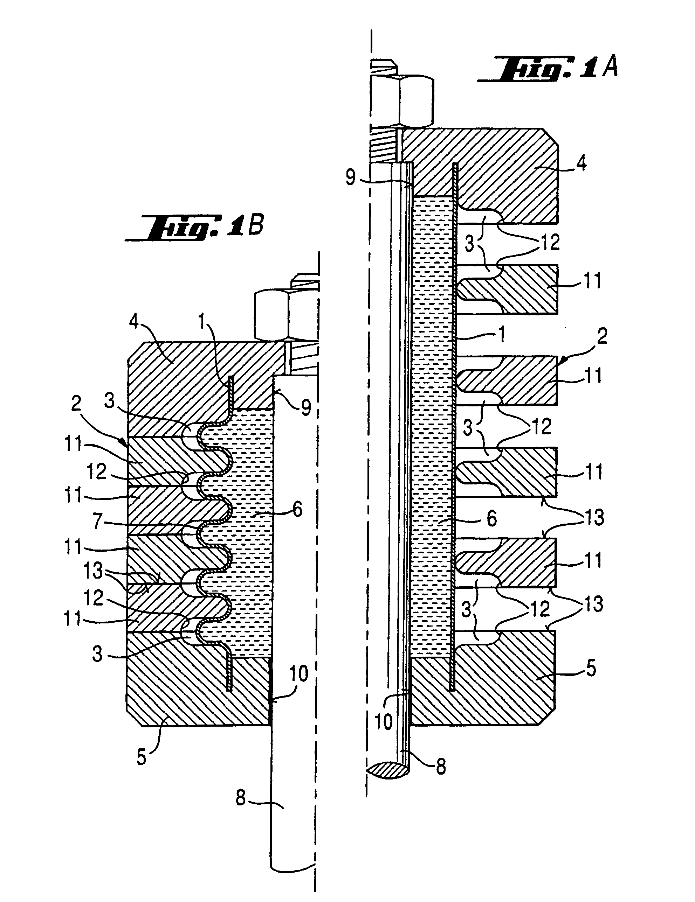

In **Fig. 1 A, B** ist das erfindungsgemäße Verfahren in einer beispielhaften Prinzipskizze und für eine bevorzugte Ausführungsform dargestellt, wobei Fig. 1 A den Ausgangszustand und Fig. 1 B den Zustand am Ende des Umformvorganges zeigt.

Das glattwandige Ausgangsrohrstück (1) sitzt in einem zylindrischen Formwerkzeug (2) mit einem Innendurchmesser, der im wesentlichen dem Außendurchmesser des Rohrstücks entspricht. Das Formwerkzeug (2) weist radiale wellenförmige Ausnehmungen (3) auf. An den Rohrenden sind Preßwerkzeuge (4, 5) angebracht, die den so gebildeten Innenraum dicht verschließen. Der von Preßwerkzeug (4, 5) und Rohr gebildete Raum ist vollständig mit einer hydraulischen Flüssigkeit (6) befüllt. Über die Preßwerkzeuge (4, 5) wird eine axialen Kompression ausgeübt, beispielsweise durch die Backen einer hydaulischen Presse (nicht gezeigt). Hierdurch werden die Preßwerkzeuge (4, 5) und damit die Rohrenden aufeinander zubewegt, wodurch bei gleichzeitiger Verkürzung des Rohrstücks dessen Wandung den Ausnehmungen (3) des Formwerkzeugs (2) entsprechende Auswölbungen (7) erhält.

In einer besonderen Ausführungsform wird die axiale Kompression durch eine Zugstange (8) ausgeübt, welche durch zentrale Bohrungen (9, 10) in den Preßwerkzeugen (4, 5) geführt ist, und die das beweglich angeordnete Preßwerkzeug (4) auf das feststehende Preßwerkzeug (5) zubewegt.

In einer besonders bevorzugten Ausführungsform ist das zylindrische Formwerkzeug (2) aus in axialer Richtung beweglich gelagerten Formscheiben (11) zusammengesetzt, die im Anfangszustand im Abstand voneinander angeordnet sind und die im Verlaufe der axialen Kompression zusammengefahren werden. Bei einer derartigen Ausgestaltung des Formwerkzeugs ist es besonders vorteilhaft, wenn sich die maximalen Erhebungen (12) der wellenförmigen Ausnehmungen im Bereich der axialen Kontaktflächen (13) der Formscheiben (11) befinden. Hierdurch wird der Ausdrückvorgang begünstigt und die Formgebung harmonisch und materialschonend bewirkt.

Durch das erfindungsgemäße Verfahren können, insbesondere mit PGM-Werkstoffen, unabhängig vom Durchmesser und der Rohrgeometrie des Ausgangsrohrstücks in einem einzigen Arbeitsgang praktisch beliebige Wellenkonturen erzeugt werden.

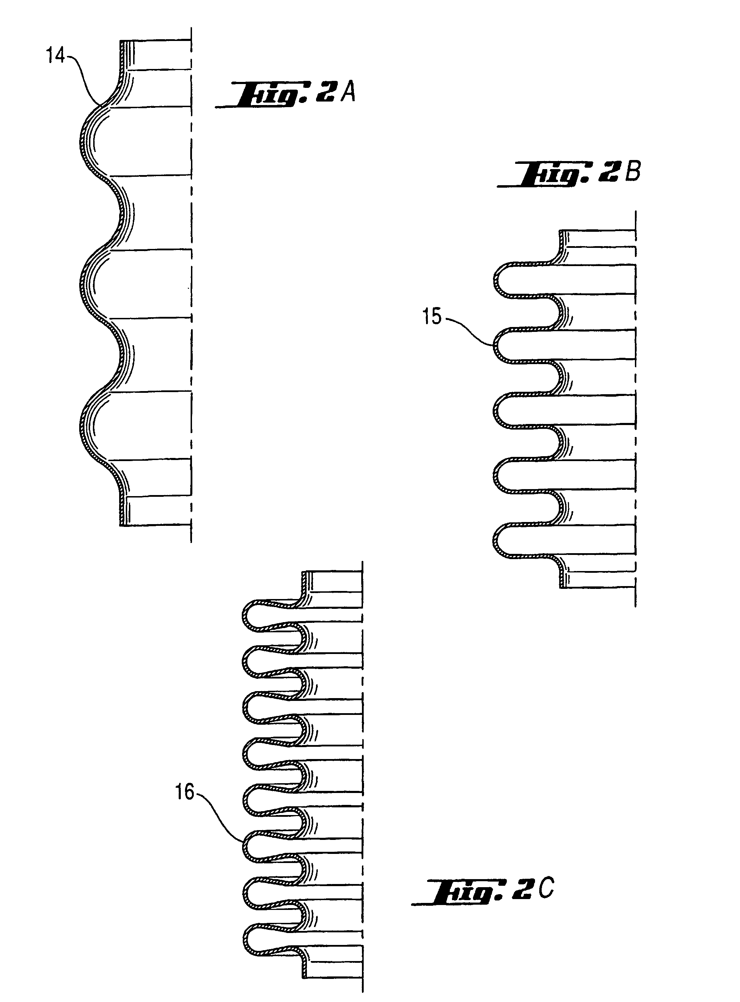

Typische Wellenkonturen sind beispielhaft in **Fig. 2 A, B, C** gezeigt. Flache Wellenformen (14) (Fig. 2 A) werden etwa durch ein Formwerkzeug hergestellt, dessen Ausnehmungen im radialen Schnitt eine im wesentlichen sinusförmige Kontur aufweisen. Wellenformen mit höherem Wellengang (15, 16) (Fig. 2 B, 2 C) können durch Formwerkzeuge hergestellt werden, deren Ausnehmungen im radialen Schnitt eine ausgeprägte wellenförmige oder eine lyraförmige Kontur aufweisen.

Der besondere Vorteil des erfindungsgemäßen Verfahrens im Vergleich zum Rollsicken ist, daß zum einen wesentlich höhere Umformgrade realisierbar sind, und zum anderen keine oder nur sehr geringe Wanddickenunterschiede innerhalb und außerhalb des Wellprofils auftreten. So weist beispielsweise ein aus PGM-Werkstoff nach dem erfindungsgemäßen Verfahren hergestellter Balg mit typischer Lyraform Wanddickenunterschiede von maximal 10% auf. Bei einem mäßig ausgeprägtem (etwa sinusförmigem) Wellrohr treten Wanddickenschwankungen von höchstens 1% auf. Entsprechend geformte Bauteile sind daher wesentlich stabiler und gegenüber mechanischen, thermischen und abbrassiven Belastungen erheblich haltbarer.

Nach dem erfindungsgemäßen Verfahren hergestellte, aus PGM-Werkstoffen gefertigte rohrförmige Konstruktionsteile mit radial umlaufenden wellenförmigen Auswölbungen eignen sich daher im besonderen Maße als Längenausdehnungskompensatoren in Anlagen oder Anlagenteilen, die in Kontakt mit Glasschmelze kommen. Dabei werden etwa flache Wellenformen (14; **Fig. 2 A)** bevorzug dort angewendet, wo es in erster Linie auf hohe radiale Formstabilität und nur auf eine mäßige thermische Längenausdehnungskompensation ankommt. Ausgeprägtere Wellenformen oder lyraförmige Wellenkonturen (15, 16; **Fig. 2 B, C**) sind in axialer Richtung sehr elastisch und können daher bereits bei kurzer Länge des Wellrohrstücks größere Längenausdehnungen auffangen.

Entsprechende Konstruktionsteile können sehr vorteilhaft als Längenausdehnungskompensatoren in Glasschmelze führenden Anlagenteilen wie Speiserrohren und Läuterkammern oder in Anlagenteilen zur Förderung, Homogenisierung oder Dosierung von Glasschmelze wie Stirrern, Plungern und Rührzellen eingesetzt werden.

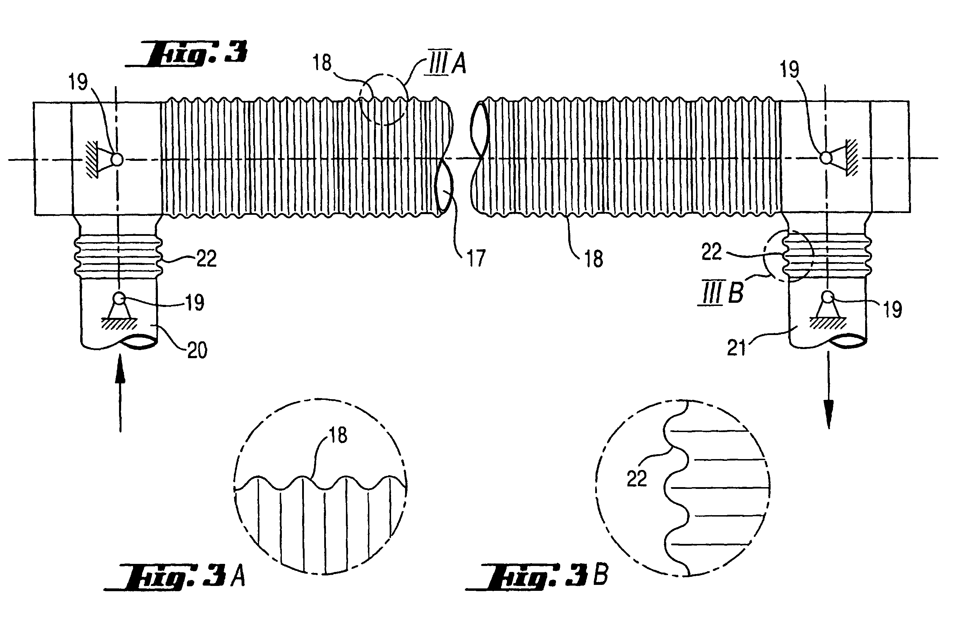

**Fig. 3** zeigt in beispielhafter Weise schematisch die Rohrkonstruktion aus PGM-Werkstoff für eine Unterdruck-Läuterkammer (17). Das Rohr der Läuterstrecke weist Segmente mit nach dem erfindungsgemäßen Verfahren erzeugtem Wellprofil (18) (Teilbereich III A in Fig. 3 A vergrößert dargestellt) auf, die die auftretende thermische Längenausdehnung zwischen den Fixierungspunkten (19) auffangen. Die Zu- und Ableitungen (20, 21) für den Glasfluß besitzen gewellte Bereiche anderer Dimensionierung (22) (Teilbereich III B in Fig. 3 B vergrößert dargestellt).

## Patentansprüche

1. Verfahren zur Herstellung von rohrförmigen Konstruktionsteilen mit radial umlaufenden wellenförmigen Auswölbungen durch Umformen aus glattwandigen, aus PGM-Werkstoff gefertigten Rohrstücken, wobei das Umformen durch Auspressen mit hydraulischem Innendruck dadurch erfolgt,
daß man ein glattwandiges Rohrstück (1) in ein zylindrisches Formwerkzeug (2) mit einem Innendurchmesser, der im wesentlichen dem Außendurchmesser des Rohrstücks entspricht, und das radiale wellenförmige Ausnehmungen (3) aufweist, einbringt, dieses an beiden axialen Enden mit je einem das Rohrende dicht verschließenden Preßwerkzeug (4, 5) versieht, den so gebildeten Raum vollständig mit einer hydraulischen Flüssigkeit (6) befüllt und dann durch Ausübung einer axialen Kompression über die Preßwerkzeuge (4, 5) in der Weise einen hydraulischen Innendruck erzeugt, daß bei gleichzeitiger Verkürzung des Rohrstücks dessen Wandung den Ausnehmungen (3) des Formwerkzeugs (2) entsprechende Auswölbungen (7) erhält,
wobei die axiale Kompression durch eine Zugstange (8) ausgeübt wird, welche durch zentrale Bohrungen (9, 10) in den Preßwerkzeugen (4, 5) geführt ist, und die das beweglich angeordnete Preßwerkzeug (4) auf das feststehende Preßwerkzeug (5) zubewegt, wobei
das Formwerkzeug (2) aus in axialer Richtung beweglich gelagerten Formscheiben (11) zusammengesetzt ist, die im Anfangszustand im Abstand voneinander angeordnet sind und die im Verlaufe der axialen Kompression zusammengefahren werden.

2. Verfahren nach Anspruch 1,
**dadurch gekennzeichnet,**
**daß** sich die maximalen Erhebungen der wellenförmigen Ausnehmungen (12) im Bereich der axialen Kontaktflächen (13) der Formscheiben (11) befinden.

3. Verfahren nach den Ansprüchen 1 oder 2,
**dadurch gekennzeichnet,**
**daß** die wellenförmigen Ausnehmungen des Formwerkzeugs im radialen Schnitt eine im wesentlichen sinusförmige Kontur (14) aufweisen.

4. Verfahren nach den Ansprüchen 1 oder 2,
**dadurch gekennzeichnet,**
**daß** die wellenförmigen Ausnehmungen des Formwerkzeugs im radialen Schnitt eine ausgeprägte wellenförmige Kontur (15) aufweisen.

5. Verfahren nach den Ansprüchen 1 oder 2,
**dadurch gekennzeichnet,**
**daß** die wellenförmigen Ausnehmungen des Formwerkzeugs im radialen Schnitt eine lyraförmige Kontur (16) aufweisen.

6. Verwendung der nach dem Verfahren gemäß den Ansprüchen 1 bis 5 hergestellten Konstruktionsteile.als Längenausdehnungskompensatoren in Anlagen oder Anlagenteilen, die in Kontakt mit Glasschmelze kommen.

7. Verwendung nach Anspruch 6 als Längenausdehnungskompensatoren in Glasschmelze führenden Anlagenteilen wie Speiserrohren und Läuterkammern.

8. Verwendung nach Anspruch 6 als Längenausdehnungskompensatoren in Anlagenteilen zur Förderung, Homogenisierung oder Dosierung von Glasschmelze wie Stirrern, Plungern und Rührzellen.

## Claims

1. A process for the production of tubular structural parts having radially circumferential undulating bulges by forming from smooth-walled tube pieces from PGM materials, wherein the forming by pressing by hydraulic internal pressure is achieved in that a smooth-walled tube piece (1) is inserted into a cylindrical forming die (2) with an internal diameter that corresponds substantially to the external diameter of the tube piece and that comprises radial undulating recesses (3), this die is provided at both axial ends with a press tool (4, 5) that tightly seals the tube ends, the space that is thus formed is completely filled with an hydraulic fluid (6), and an hydraulic internal pressure is then produced by exerting an axial compression via the press tools (4, 5) in such a way that under simultaneous shortening of the tube piece bulges (7) are formed in the wall of the latter that correspond to the recesses (3) of the forming die (2), wherein the axial compression is exerted by a drawbar (8) that is guided through central bores (9, 10) in the press tools (4, 5), and that forces the movably arranged press tool (4) towards the stationary press tool (5), wherein the forming tool (2) comprises formers (11) movably mounted in axial direction, which in the initial state are arranged spaced apart from one another and which in the course of the axial compression are driven together.

2. The process according to claim 1, **characterised in that** the maximum heights of the undulating recesses (12) are located in the region of the axial contact surfaces (13) of the formers (11).

3. The process according to claim 1 or 2, **characterised in that** the undulating recesses of the forming die have in radial cross section a substantial sinusoidal contour (14).

4. The process according to claim 1 or 2, **characterised in that** the undulating recesses of the forming die have in radial cross section a pronounced undulating contour (15).

5. The process according to claim 1 or 2, **characterised in that** the undulating recesses of the forming die have in radial cross section a lyre-shaped contour (16).

6. The use of the structural parts produced by the process according to claims 1 to 5, as linear expansion compensators in units or parts of units that come into contact with glass melts.

7. The use according to claim 6 as linear expansion compensators in plant parts guiding glass melts such as feed tubes and refining chambers.

8. The use according to claim 6 as linear expansion compensators in plant parts involved in the conveying, homogenisation or metering of glass melts, such as stirrers, plunges and stirring units.

## Revendications

1. Procédé de fabrication d'éléments de construction tubulaires avec des renflements ondulés périphériques radiaux, par transformation de segments de tube à paroi lisse en matériau PGM, la transformation par pressage à pression intérieure hydraulique s'effectuant
en insérant un segment de tube (1) à paroi lisse dans un outil de formage (2) cylindrique d'un diamètre intérieur correspondant pour l'essentiel au diamètre extérieur du segment de tube et présentant des évidements (3) ondulés radiaux,
en y disposant aux deux extrémités axiales un outil de pression (4, 5) fermant hermétiquement l'extrémité de tube,
en remplissant complètement l'espace ainsi formé avec un liquide hydraulique (6), et
en générant ensuite par l'exercice d'une compression axiale des outils de pression (4, 5) une pression intérieure hydraulique pour ainsi, tout en raccourcissant le segment de tube, conférer à la paroi de celui-ci des renflements (7) correspondant aux évidements (3) de l'outil de formage (2),
la compression axiale étant exercée par une tige de traction (8) guidée à travers des alésages centraux (9, 10) dans les outils de pression (4, 5) et qui rapproche l'outil de pression (4) mobile de l'outil de pression (5) immobile, l'outil de formage (2) étant composé de disques de formage (11) mobiles dans la direction axiale, qui à l'état initial sont disposés à distance les uns des autres et se rapprochent au fur et à mesure de la compression axiale.

2. Procédé selon la revendication 1,
**caractérisé en ce que**
les élévations maximales des évidements (12) ondulés se trouvent dans la zone des surfaces de contact axiales (13) des disques de formage (11).

3. Procédé selon les revendications 1 ou 2,
**caractérisé en ce que**
les évidements ondulés de l'outil de formage présentent en coupe radiale un contour (14) pour l'essentiel sinusoïdal.

4. Procédé selon les revendications 1 ou 2,
**caractérisé en ce que**
les évidements ondulés de l'outil de formage présentent en coupe radiale un contour (15) ondulé prononcé.

5. Procédé selon les revendications 1 ou 2,
**caractérisé en ce que**
les évidements ondulés de l'outil de formage présentent en coupe radiale un contour (16) en forme de lyre.

6. Utilisation des éléments de construction fabriqués suivant le procédé selon les revendications 1 à 5, comme compensateurs de dilatation linéaire dans des installations ou parties d'installations entrant en contact avec du verre fondu.

7. Utilisation selon la revendication 6, comme compensateurs de dilatation linéaire dans des parties d'installation telles que des tubes d'alimentation ou des chambres d'affinage contenant du verre fondu.

8. Utilisation selon la revendication 6, comme compensateurs de dilatation linéaire dans les parties d'installations servant au transport, à l'homogénéisation ou au dosage de verre fondu telles que des aubes, des plongeurs et des cellules d'agitation.
